# EUROPÄISCHE PATENTANMELDUNG

(11) **EP 2 369 856 A2**
(43) Veröffentlichungstag der Anmeldung: **28.09.2011**
(21) Anmeldenummer: 11154680.0
(22) Anmeldetag: 16.02.2011
(51) Int. Cl.: H04R 25/00

(54) **Verfahren zur Übertragung von Daten zwischen einem Hörgerät und einer externen Einheit sowie zugehörige Anordnung**

(30) Priorität: 24.03.2010 DE 102010012623
(71) Anmelder: Siemens Medical Instruments Pte. Ltd., Singapore 139959 (SG)
(72) Erfinder: Boguslavskij, Mihail, 91056, Erlangen (DE); Schätzle, Ulrich, 91052, Erlangen (DE)
(74) Vertreter: Maier, Daniel Oliver

(57) **Zusammenfassung**

Verfahren zur Übertragung von Daten zwischen einem Hörgerät und einer externen Einheit sowie zugehörige Anordnung

Die Erfindung gibt ein Verfahren und eine zugehörige Anordnung zur Übertragung von Daten zwischen einem Hörgerät (10) und einer externen Einheit (20) an. Von der externen Einheit wird ein erstes Datenpaket (27) zu dem Hörgerät gesendet. Das erste Datenpaket (17) wird durch das Hörgerät empfangen und ein zweites Datenpaket (19) wird von dem Hörgerät an die externe Einheit gesendet. Zwischen dem Ende des Empfangens des ersten Datenpakets (17) und dem Anfang des Sendens des zweiten Datenpakets (19) vergeht eine vorgebbare feste Zeitdauer (30). Dadurch "weiß" die externe Einheit (20), wann das erste Bit des zweiten Datenpakets (19) ankommen soll. Die Erfindung bietet den Vorteil, dass die Zuverlässigkeit einer Datenübertragung verbessert wird. Bei einer paketorientierten Datenübertragung sind weniger Datenpaketwiederholungen erforderlich, wodurch die Übertragungsgeschwindigkeit steigt.

## Beschreibung

Verfahren zur Übertragung von Daten zwischen einem Hörgerät und einer externen Einheit sowie zugehörige Anordnung

Die Erfindung betrifft ein in den unabhängigen Ansprüchen angegebenes Verfahren und eine angegebene Anordnung zur Übertragung von Daten zwischen einem Hörgerät und einer externen Einheit, wobei ein erstes Datenpaket von der externen Einheit zu dem Hörgerät gesendet wird, das erste Datenpaket vom Hörgerät empfangen wird und anschließend ein zweites Datenpaket von dem Hörgerät an die externe Einheit gesendet wird.

Hörgeräte besitzen prinzipiell als wesentliche Komponenten einen Eingangswandler, einen Verstärker und einen Ausgangswandler. Der Eingangswandler ist in der Regel ein Schallempfänger, z. B. ein Mikrofon, und/oder ein elektromagnetischer Empfänger, z. B. eine Induktionsspule. Der Ausgangswandler ist meist als elektroakustischer Wandler, z. B. Miniaturlautsprecher, oder als elektromechanischer Wandler, z. B. Knochenleitungshörer, realisiert. Der Verstärker ist üblicherweise in eine Signalverarbeitungseinheit integriert.

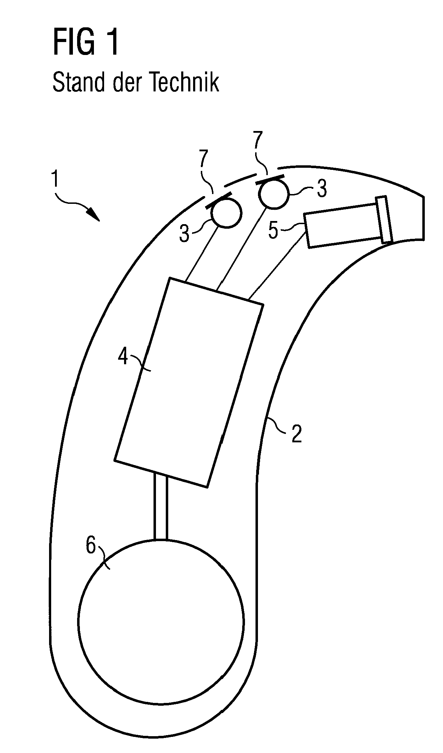

Dieser prinzipielle Aufbau ist in Figur 1 am Beispiel eines Hinter-dem-Ohr Hörgeräts 1 dargestellt. In ein Hörgerätegehäuse 2 zum Tragen hinter dem Ohr sind üblicherweise zwei Mikrofone 3 zur Aufnahme des Schalls aus der Umgebung eingebaut. Oberhalb der Mikrofone 3 sind Mikrofonöffnungen 7 in dem Hörgerätegehäuse 2 ausgebildet. Durch die Mikrofonöffnungen 7 kann der Schall zu den Mikrofonen 3 im Inneren des Hörgerätegehäuses 2 gelangen. Eine Signalverarbeitungseinheit 4, die ebenfalls in das Hörgerätegehäuse 2 integriert ist, verarbeitet die Mikrofonsignale und verstärkt sie. Das Ausgangssignal der Signalverarbeitungseinheit 4 wird an einen Lautsprecher bzw. Hörer 5 übertragen, der ein akustisches Signal ausgibt. Der Schall wird gegebenenfalls über einen nicht dargestellten Schallschlauch, der mit einer Otoplastik im Gehörgang fixiert ist, zum Trommelfell des Hörgeräteträgers übertragen. Die Energieversorgung des Hörgeräts 1 und insbesondere die der Signalverarbeitungseinheit 4 erfolgt durch eine ebenfalls ins Hörgerätegehäuse 2 integrierte Batterie 6.

In der DE 10 2008 018 041 A1 ist ein derartiges Hinter-dem-Ohr Hörgerät mit einer Mikrofonöffnung, mit einem Lautsstärkeregler, mit einer Programmierbuchse, mit einer Programmtaste mit Aus-Funktion und mit einem Batteriefach offenbart.

Bei einer drahtlosen Datenübertragung zwischen einem Hörgerät und beispielweise einer Fernbedienung steht für eine Decodierung der übertragenen Daten kein gemeinsames Taktsignal zur Verfügung. Daher müssen das Hörgerät und die Fernbedienung ihre Taktsignale aus eigenen frequenzstabilen Taktquellen, beispielsweise aus Schwingquarzen, erzeugen. Obwohl Schwingquarze eine Frequenzstabilität von 20 ppm und besser aufweisen, müssen die Taktsignale regelmäßig synchronisiert werden, um das unvermeidbare "Auseinanderlaufen" der Taktsignale zu korrigieren.

Die Neusysnchronisation der Taktsignale erfolgt kontinuierlich durch Taktrückgewinnung aus den übertragenen Daten, wobei die sogenannte "Return-to-Zero Kodierung" bzw. die "Manchester-Kodierung" verwendet wird. Dadurch wird aber die verfügbare Bandbreite für Nutzdaten verringert.

Bei einer paketorientierten Datenübertragung kann das Taktsignal am Anfang eines jeden Datenpakets mit Hilfe einer mit-übertragenen Synchronisations-Sequenz synchronisiert werden. Im Falle von Störungen der Synchronisation können die Daten nicht dekodiert werden und das Datenpaket muss noch einmal gesendet werden. Bei ungünstigen Übertragungsbedingungen wird so durch Wiederholungen die Übertragungsgeschwindigkeit verringert.

Die DE 198 19 509 A1 offenbart ein bidirektionales Datenübertragungsverfahren für Hörgeräte mittels Signalen verschiedener Impulsbreiten. Dabei wird bei einer Datenrückübertragung von einem Hörgerät zu einem Programmiergerät in einem Übertragungsrahmen an einer bestimmten Stelle eine Rückantwortinformation eingefügt werden.

Die US 2007/0009124 A1 gibt ein drahtloses Netzwerk mit einem Hörgerät und einer Vielzahl anderer Geräte an. Ein Gerät ist der Master, der Zeitinformationen an die anderen Geräte des Netzwerks versendet, damit sich diese synchronisieren können.

Es ist Aufgabe der Erfindung eine Datenübertragung zwischen einer externen Einheit und einem Hörgerät zu verbessern.

Gemäß der Erfindung wird die gestellte Aufgabe mit dem Verfahren und der Anordnung zur Datenübertragung der unabhängigen Patentansprüche gelöst.

Die Erfindung beansprucht ein Verfahren zur Übertragung von Daten zwischen einem Hörgerät und einer externen Einheit. Das Verfahren umfasst die Schritte:
- Senden eines ersten Datenpakets von der externen Einheit an das Hörgerät,
- Empfangen des ersten Datenpakets durch das Hörgerät und
- Senden eines zweiten Datenpakets von dem Hörgerät an die externe Einheit, wobei zwischen dem Ende des Empfangens des ersten Datenpakets und dem Anfang des Sendens des zweiten Datenpakets eine vorgebbare feste Zeitdauer vergeht.
Die Erfindung bietet den Vorteil, dass die Zuverlässigkeit einer Datenübertragung verbessert wird. Bei einer paketorientierten Datenübertragung sind weniger Datenpaketwiederholungen erforderlich, wodurch die Übertragungsgeschwindigkeit steigt. Die Sendestärke des Hörgeräts kann verringert werden, wodurch die Lebensdauer einer Hörgerätebatterie oder die Laufzeit eines Hörgeräteakkus verlängert werden kann.

In einer Weiterbildung kann die Übertragung drahtlos erfolgen.

In einer weiteren Ausführungsform kann die feste Zeitdauer in der externen Einheit gespeichert sein.

Des Weiteren kann das erste Datenpaket eine Synchronisationssequenz umfassen, mit der eine Taktverschiebung in dem Hörgerät korrigiert wird.

Die Erfindung beansprucht auch eine Anordnung zur drahtlosen Übertragung von Daten mit einem Hörgerät und mit einer externen Einheit zur Durchführung einer erfindungsgemäßen Verfahrens. In dem Hörgerät ist die vorgebbare, feste Zeitdauer gespeichert.

Weitere Besonderheiten und Vorteile der Erfindung werden aus den nachfolgenden Erläuterungen mehrerer Ausführungsbeispiele anhand von schematischen Zeichnungen ersichtlich.

Es zeigen:
- Figur 1:: ein Hinter-dem-Ohr Hörgerät gemäß Stand der Technik,
- Figur 2:: ein Ablaufdiagramm einer Datenübertragung zwischen einer Fernbedienung und einem Hörgerät gemäß Stand der Technik,
- Figur 3:: ein Ablaufdiagramm einer Datenübertragung zwischen einer externen Einheit und einem Hörgerät,
- Figur 4:: ein Ablaufdiagramm einer Datenübertragung zwischen einer externen Einheit und einem Hörgerät mit Synchronisationssequenz und
- Figur 5:: ein Blockschaltbild einer Anordnung mit einer externen Einheit und einem Hörgerät.

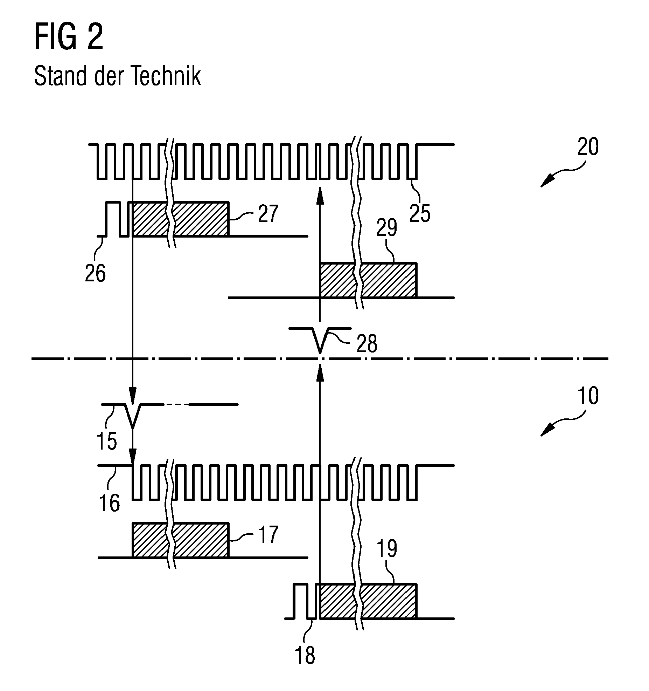

Figur 2 zeigt schematisch ein Ablaufdiagramm einer bekannten drahtlosen Datenübertragung zwischen einer Fernbedienung 20 und einem Hörgerät 10. Durch ein Taktsignal 25 in der Fernbedienung 20 wird die Abgabe eines ersten Datenpakets 27 synchronisiert. Das erste Datenpaket 27 umfasst auch eine vorgelagerte Synchronisationssequenz 26. Das erste Datenpaket 27 wird von dem Hörgerät 10 empfangen und aufgrund der empfangenen Synchronisationssequenz 26 erfolgt eine Taktsynchronisation 15, die das Taktsignal 16 des Hörgeräts 10 mit dem Taktsignal 25 der Fernbedienung 20 synchronisiert, so dass beide "gleichlaufen". So kann das empfangene erste Datenpaket 17 im Hörgerät 10 richtig dekodiert werden.

Das Hörgerät 10 antwortet der Fernbedienung 20 nach einiger Zeit mit einem zweiten Datenpaket 19, das eine vorgeschaltete Synchronisationssequenz 18 umfasst. Anhand dieser Synchronisationssequenz 18 erfolgt eine Taktsynchronisation 28 in der Fernbedienung 20, wodurch das Taktsignal 16 der Fernbedienung 20 mit dem Taktsignal 19 des Hörgeräts 10 synchronisiert wird. Dadurch kann das in der Fernbedienung 20 empfangene zweite Datenpaket 29 richtig dekodiert werden.

Im Falle von geringen Signalpegeln oder Störungen bei der Übertragung ist die Synchronisation des empfangenen zweiten Datenpakets 29 fehlerhaft, so dass eine neuerliche Übertragung des zweiten Datenpakets 19 angefordert werden muss.

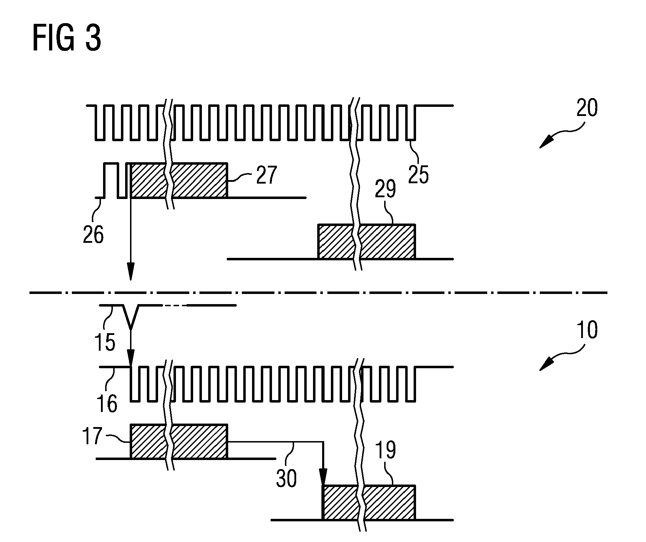

Figur 3 zeigt schematisch ein Ablaufdiagramm einer erfindungsgemäßen Datenübertragung zwischen einer externen Einheit 20, beispielsweise einer Hörgerätefernbedienung, und einem Hörgerät 10. Durch ein Taktsignal 25 in der externen Einheit 20 wird die Abgabe eines ersten Datenpakets 27 synchronisiert. Das erste Datenpaket 27 umfasst auch eine vorgelagerte Synchronisationssequenz 26. Das erste Datenpaket 27 wird von dem Hörgerät 10 empfangen und aufgrund der empfangenen Synchronisationssequenz 26 erfolgt eine Taktsynchronisation 15, die das Taktsignal 16 des Hörgeräts 10 mit dem Taktsignal 25 der externen Einheit 20 synchronisiert, so dass beide "gleichlaufen". So kann das empfangene erste Datenpaket 17 im Hörgerät 10 richtig dekodiert werden.

Das Hörgerät 10 antwortet der externen Einheit 20 anschließend erfindungsgemäß nach einer vorgebbaren Zeitdauer 30 mit einem zweiten Datenpaket 19. Dadurch "weiß" die externe Einheit 20, wann das erste Bit des zweiten Datenpakets 19 ankommen soll. Die Zeitdauer 30 ist auch der externen Einheit 20 bekannt, so dass eine Synchronisierung der externen Einheit 20 entfallen kann. Die maximale Zeitdauer 30 ist u.a. abhängig von einem gewählten Modulationsverfahren und von den Eigenschaften eines Übertragungskanals. Dadurch kann das in der Fernbedienung 20 empfangene zweite Datenpaket 29 richtig dekodiert werden. Es können unterschiedliche Zeitdauern 30 verwendet werden, um unterschiedlich lange Datenverarbeitungszeiten im Hörgerät 10 zu berücksichtigen.

Das exakte Einhalten der Zeitdauer 30 setzte voraus, dass das Ende des empfangenen ersten Datenpakets 17 im Hörgerät 10 zeitlich aufgelöst erkannt wird. Infolge des starken Signals der externen Einheit 20 ist die Signalstärke am Hörgerät 10 ausreichend groß.

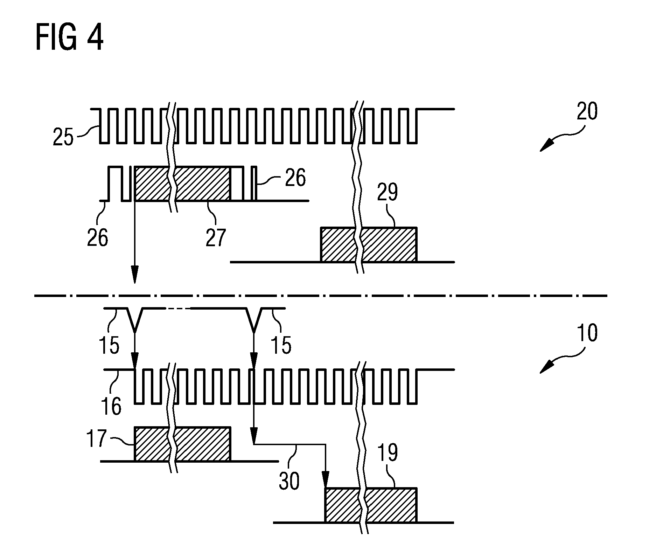

Figur 4 zeigt schematisch ein Ablaufdiagramm einer weiteren erfindungsgemäßen Datenübertragung zwischen einer externen Einheit 20, beispielsweise einer Hörgerätefernbedienung, und einem Hörgerät 10. Durch ein Taktsignal 25 in der externen Einheit 20 wird die Abgabe eines ersten Datenpakets 27 synchronisiert. Das erste Datenpaket 27 umfasst auch eine vorgelagerte Synchronisationssequenz 26. Das erste Datenpaket 27 wird von dem Hörgerät 10 empfangen und aufgrund der empfangenen Synchronisationssequenz 26 erfolgt eine Taktsynchronisation 15, die das Taktsignal 16 des Hörgeräts 10 mit dem Taktsignal 25 der externen Einheit 20 synchronisiert, so dass beide "gleichlaufen". So kann das empfangene erste Datenpaket 17 im Hörgerät 10 richtig dekodiert werden

Bei langen ersten Datenpaketen 27 können während der Datenübertragung das Hörgeräte-Taktsignal 16 und das Taktsignal 25 der externen Einheit 20 auseinanderdriften und zu Ungenauigkeiten führen. Um dies zu Verhindern, wird wie in Figur 4 dargestellt am Ende des ersten Datenpakets 27 von der externen Einheit 20 eine Synchronisationssequenz 26 an das Hörgerät 10 übertragen. Die Synchronisationssequenz 26 nutzt das Hörgerät 10 zur Taktsynchronisation 15, um eine Drift des Taktsignals 16 zu korrigieren.

Das Hörgerät 10 antwortet der externen Einheit 20 anschließend erfindungsgemäß nach einer vorgebbaren Zeitdauer 30 nach dem Ende der empfangenen Synchronisationssequenz 26 mit einem zweiten Datenpaket 19. Die Zeitdauer 30 ist auch der externen Einheit 20 bekannt, so dass eine Synchronisierung der externen Einheit 20 entfallen kann. Dadurch "weiß" die externe Einheit 20, wann das erste Bit des zweiten Datenpakets 19 ankommen soll. Dadurch kann das in der Fernbedienung 20 empfangene zweite Datenpaket 29 richtig dekodiert werden. Es können unterschiedliche Zeitdauern 30 verwendet werden, um unterschiedlich lange Datenverarbeitungszeiten im Hörgerät 10 zu berücksichtigen.

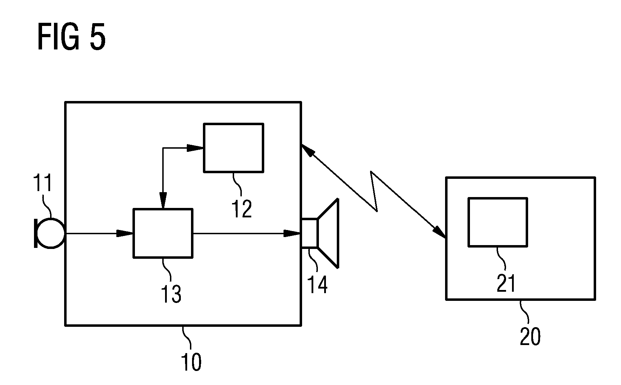

Figur 5 zeigt eine erfindungsgemäße Anordnung zur drahtlosen Datenübertragung zwischen einer externen Einheit 20 und einem Hörgerät 10. Das Hörgerät 10 umfasst ein Mikrofon 11, eine Signalverarbeitungseinheit 13 und einen Hörer 14. Mit Hilfe eines ersten Funkmoduls 12 können drahtlos Daten zu der externen Einheit 20 übertragen werden bzw. von dieser empfangen werden. Die externe Einheit 20 umfasst ein zweites Funkmodul 21 zur drahtlosen Kommunikation mit dem ersten Funkmodul 12 des Hörgeräts 10. Bei der Datenübertragung vergeht erfindungsgemäß zwischen dem Ende des Empfangens eines von der externen Einheit abgegebenen ersten Datenpakets in dem ersten Funkmodul 12 und dem Anfang des Sendens eines zweiten Datenpakets vom Hörgerät 10 zu der externen Einheit 20 eine vorgebbare feste Zeitdauer. Die Zeitdauer ist im Hörgerät 10 und in der externen Einheit 20 gespeichert.

### Bezugszeichenliste

- 1: Hinter-dem-Ohr Hörgerät
- 2: Hörgerätegehäuse
- 3: Mikrofon
- 4: Signalverarbeitungseinheit
- 5: Hörer
- 6: Batterie
- 7: Mikrofonöffnung im Hörgerätegehäuse 2

- 10: Hörgerät
- 11: Mikrofon
- 12: Erstes Funkmodul
- 13: Signalverarbeitungseinheit
- 14: Hörer
- 15: Taktsynchronisation
- 16: Hörgeräte-Taktsignal
- 17: empfangenes erstes Datenpaket
- 18: Synchronisationssequenz
- 19: zweites Datenpaket

- 20: Externe Einheit / Fernbedienung
- 21: Zweites Funkmodul
- 25: Taktsignal der externen Einheit 20
- 26: Synchronisationssequenz
- 27: erstes Datenpaket
- 28: Taktsynchronisation
- 29: empfangenes zweites Datenpaket

- 30: Feste Zeitdauer

## Patentansprüche

1. Verfahren zur Übertragung von Daten zwischen einem Hörgerät (10) und einer externen Einheit (20) durch:
- Senden eines ersten Datenpakets (27) von der externen Einheit (20) an das Hörgerät (10) und
- Empfangen des ersten Datenpakets (17) durch das Hörgerät (10),
**gekennzeichnet durch**:
- Senden eines zweiten Datenpakets (19) von dem Hörgerät (10) an die externe Einheit (20) nach einer vorgebbaren festen Zeitdauer nach dem Ende des Empfangens des ersten Datenpakets (17),
und **dadurch** gekennzeichnet,
dass die feste Zeitdauer (30) in der externen Einheit (20) gespeichert ist, wobei die externe Einheit (20) weiß, wann das erste Bit des zweiten Datenpakets (19) ankommt, und keine Taktsynchronisierung in der externen Einheit (20) erfolgt.

2. Verfahren nach Anspruch 1,
**dadurch gekennzeichnet,**
**dass** die Übertragung eine drahtlose ist.

3. Verfahren nach Anspruch 1 oder 2,
**dadurch gekennzeichnet,**
**dass** das erste Datenpaket (27) eine Synchronisationssequenz (26) umfasst, mit der eine Taktverschiebung in dem Hörgerät (10) korrigiert wird.

4. Anordnung zur drahtlosen Übertragung von Daten mit einem Hörgerät (10) und mit einer externen Einheit (20) zur Durchführung des Verfahrens nach einem der vorhergehenden Ansprüche, wobei in dem Hörgerät (10) die feste Zeitdauer (30) gespeichert ist.

5. Anordnung nach Anspruch 4,
**dadurch gekennzeichnet,**
**dass** die externe Einheit (20) eine Hörgerätefernbedienung ist.

6. Anordnung nach Anspruch 4 oder 5,
**gekennzeichnet durch**:
- ein erstes Funkmodul (12) in dem Hörgerät (10) und
- ein zweites Funkmodul (21) in der externen Einheit (20).
